# EUROPÄISCHE PATENTSCHRIFT

(11) **EP 1 432 652 B1**
(45) Veröffentlichungstag und Bekanntmachung des Hinweises auf die Patenterteilung: **15.12.2010**
(21) Anmeldenummer: 02782804.5
(22) Anmeldetag: 01.10.2002
(51) Int. Cl.: C02F 3/12, C02F 3/08, C02F 11/12

(54) **VERFAHREN UND VORRICHTUNG ZUM REINIGEN VON ABWÄSSERN**
METHOD AND DEVICE FOR PURIFYING WASTEWATERS
PROCEDE ET DISPOSITIF D'EPURATION D'EAUX USEES

(30) Priorität: 01.10.2001 DE 10148474
(43) Veröffentlichungstag der Anmeldung: 30.06.2004
(73) Patentinhaber: Papierfabrik August Koehler AG, 77704 Oberkirch (DE)
(72) Erfinder: KRAFT, Harald, 77704 Oberkirch-Nussbach (DE); ARMBRUSTER, Hans-Thomas, 77855 Achern-Grossweier (DE); BENZ, Wendelin, 77704 Oberkirch-Zusenhofen (DE)
(74) Vertreter: Hagemann, Heinrich
(86) Internationale Anmeldenummer: PCT/EP2002/011008
(87) Internationale Veröffentlichungsnummer: WO 2003/029152

(56) Entgegenhaltungen:
- DE-A- 4 326 603
- US-A- 4 083 785
- US-A- 5 554 289
- PATENT ABSTRACTS OF JAPAN vol. 012, no. 172 (C-497), 21. Mai 1988 (1988-05-21) & JP 62 279807 A (HITACHI PLANT ENG & CONSTR CO LTD), 4. Dezember 1987 (1987-12-04)
- PATENT ABSTRACTS OF JAPAN vol. 010, no. 226 (C-364), 7. August 1986 (1986-08-07) & JP 61 061699 A (EBARA INFILCO CO LTD), 29. März 1986 (1986-03-29)
- PATENT ABSTRACTS OF JAPAN vol. 011, no. 003 (C-395), 7. Januar 1987 (1987-01-07) -& JP 61 181595 A (KURITA WATER IND LTD), 14. August 1986 (1986-08-14)

## Beschreibung

Die Erfindung betrifft ein Verfahren und eine Vorrichtung zum Reinigen von Abwässern, insbesondere von Abwässern, welche bei der Papierherstellung anfallen.

Biologische Abwasser-Reinigungsanlagen zur Reinigung von in Papierfabriken abfallenden Abwässern sind gegenwärtig weit verbreitet. Derartige Anlagen weisen im allgemeinen eine aerobe Belebungsstufe sowie eine Nachklärungsstufe auf. In der Belebungsstufe befinden sich als Belebtschlamm adaptierte Mikroorganismen, welche die im Abwasser vorhandenen organischen Stoffe unter Verbrauch von Sauerstoff abbauen. Endprodukte dieser Vorgänge sind für gewöhnlich Kohlendioxid, Wasser und Biomasse. Im Nachklärbecken, das der Belebungsstufe nachgeschaltet ist, findet eine Abtrennung des Belebtschlamm- Wassergemisches statt. Eine derartige Anlage ist beispielsweise in der Druckschrift PTS-MS 10/94 "Betrieb biologischer Abwasser-Reinigungsanlagen in Papierfabriken, Überwachung, Kontrolle und Optimierung" der Papiertechnischen Stiftung, Heßstraße 134, D-80797 München, offenbart.

Aus der DE 43 26 603 A1 ist eine Kläranlage mit einem Belebungsbecken und einem nachgeordneten Nachklärbecken bekannt. Im Abwasser mitgeführter Belebtschlamm setzt sich im Nachklärbecken ab und wird in das Belebungsbecken zurückgeführt. Da bei plötzlich auftretenden, hohen Abwassermengen, wie sie beispielsweise bei Regen auftreten, die Gefahr besteht, dass zuviel Belebtschlamm aus dem Belebungsbecken in das Nachklärbecken abgeführt wird und so das Belebungsbecken seiner Reinigungsfunktion nicht mehr erfüllen kann, ist bei dieser bekannten Kläranlage zwischen dem Belebungsbecken und dem Nachklärbecken zusätzlich ein Abzweig vorgesehen ist, durch welchen bei großen Abwassermengen ein Teilstrom des vom Belebungsbecken in das Nachklärbecken strömenden Abwassers durch eine Siebvorrichtung geleitet und anschließend vor dem Nachklärbecken wieder dem restlichen Abwasserstrom zugeleitet werden kann. Mit Hilfe der Siebvorrichtung wird in diesen Ausnahmefällen Belebtschlamm aus dem abgezweigten Abwasser gefiltert und wieder in das Belebungsbecken zurückgeführt.

Die US-A-4 083 785 offenbart eine Kläranlage mit einem Belebungsbecken und einem Nachklärbecken. Das Belebungsbecken ist in zwei in Strömungsverbindung miteinander stehende Kammern untergliedert. Abwasser strömt von der ersten Kammer in die zweite Kammer des Belebungsbeckens und von dort in das Nachklärbecken. Belebtschlamm, der sich im Nachklärbecken abgesetzt hat, wird durch eine erste Rückführleitung wieder in die erste Kammer rückgeführt. In der zweiten Kammer ist zusätzlich eine Absetzanordnung vorgesehen, in welcher sich zuviel aus der ersten Kammer in die zweite Kammer abgeführter Belebtschlamm absetzen kann. Die Absetzanordnung steht durch eine zweite Rückführleitung mit der ersten Kammer in Strömungsverbindung, um den in ihr abgesetzten Belebtschlamm wieder in die erste Kammer zurückzuführen.

Die JP 62 279807 A offenbart eine Kläranlage, bei der dem Belebungsbecken eine Vielzahl parallel geschalteter Filteranlagen nachgeordnet sind, mit deren Hilfe Belebtschlamm aus dem Abwasser gefiltert wird, welcher anschließend wieder in das Belebungsbecken rückgeführt wird.

Aus der JP 61 061699 A ist eine Kläranlage mit einem Belebungsbecken und einem nachgeordneten Nachklärbecken bekannt. Unmittelbar vor dem Ablauf in das Nachklärbecken ist im Belebungsbecken ist eine Absetzanordnung vorgesehen, in welcher sich Belebtschlamm absetzen kann. Der in der Absetzanrodnung enthaltene Belebtschlamm wird anschließend in den Abwasserzulauf des Belebungsbecken geleitet und gelangt so wieder in das Belebungsbecken. Des weiteren steht das Nachklärbecken durch eine Rückführleitung gleichfalls mit dem Abwasserzulauf des Belebungsbeckens in Verbindung, um Belebtschlamm, der sich im Nachklärbecken gesammelt hat, in den Zulauf zurückzuleiten.

Die JP 61 181595 A offenbart eine Kläranlage mit einem Belebungsbecken und einem nachgeordneten Nachklärbecken. Ein Teil des aus dem Belebungsbecken abströmenden Abwassers wird durch eine Filteranalge geleitet, in welcher Belebtschlamm aus dem Abwasser gefiltert wird. Der ausgefilterte Belebtschlamm wird anschließend wieder in das Belebungsbecken zurückgeführt, während das gefilterte Abwasser zunächst in eine Flockungsanlage geleitet wird. Nach dem Ausflocken von Schwebstoffen wird das so vorgereinigte Abwasser in das Nachklärbecken geleitet. Das Nachklärbecken steht mit einer Rückführleitung mit dem Abwasserzulauf des Belebungsbeckens in Strömungsverbindung, durch die Belebtschlamm aus dem Nachklärbecken in den Abwasserzulauf des Belebungsbeckens geleitet wird.

Aufgabe der Erfindung ist es, bei einer gattungsgemäßen Vorrichtung bzw. dem entsprechenden Verfahren die hydraulische Kapazität zu erhöhen und die vorhandene biologische Kapazität optimal auszunutzen. Erfindungsgemäß wird diese Aufgabe durch ein Verfahren nach Anspruch 1 bzw. eine Vorrichtung nach Anspruch 9 gelöst.

Die Rückführung des Schlammes aus dem Entwässerungsaggregat bzw. dem Nachklärbecken ist notwendig, um auf diese Weise die für das Belebungssystem erforderliche Biomasse wieder bereitzustellen, so daß das aerobe System in der Belebung stabilisiert wird. Durch die Rückführung des Schlammes wird insbesondere eine Beeinträchtigung der Abwasserreinigung durch Bioschlammverluste vermieden oder minimiert.

Die erste Stufe, nämlich das aerobe Klären des Abwassers in einer Belebungsstufe mittels Belebtschlamm entspricht derjenigen des Standes der Technik. Anders als nach dem Stand der Technik wird jedoch nicht das gesamte aus der Belebungsstufe ablaufende Bioschlamm-Wassergemisch dem Nachklärbecken zugeführt, sondern nur ein Teil davon. Der andere Teil wird in einem parallelen Verfahrensschritt in einem Entwässerungsaggregat entwässert. Dabei wird der entstehende eingedickte Bioschlamm sowohl aus dem Nachklärbecken als auch aus dem Entwässerungsaggregat in die Belebungsstufe zurückgeführt. Das gereinigte Abwasser, welches aus dem Nachklärbecken bzw. dem Entwässerungsaggregat austritt, kann anschließend beispielsweise direkt oder über eine Filterreinigungsstufe in einen Vorfluter geleitet werden. Durch das erfindungsgemäße Verfahren wird die hydraulische Last der Belebungsstufe und auch der Nachklärung auf ein Minimum reduziert.

Im Rahmen der vorliegenden Erfindung wurden auch Überlegungen angestellt, auf das Nachklärbecken vollkommen zu verzichten und stattdessen allein das Entwässerungsaggregat einzusetzen. Es hat sich jedoch herausgestellt, daß bei Verwendung eines alleinigen Entwässerungsaggregates starke hydraulische Schwankungen im Zulauf nur schwer beherrschbar sind. Allein die Kombination von klassischer Nachklärung mit zusätzlicher Entwässerung erlaubt eine den jeweiligen Gegebenheiten angepaßte Optimierung der Verfahrensweise.

Als Entwässerungsaggregat können beispielsweise ein Dekanter, eine Sedimentieranlage oder eine Aufkonzentrierungsanlage eingesetzt werden. Gemäß einer vorteilhaften Ausführungsform der Erfindung weist das Entwässerungsaggregat einen Siebbandfilter auf. Das Entwässern in Stufe c) wird somit in einem Siebbandfilter als Entwässerungsaggregat ausgeführt. Der aus der Siebbandentwässerung abgeschiedene Belebtschlamm beinhaltet deutlich weniger Wasser als der herkömmliche Belebtschlamm aus dem Nachklärbecken. Der Feststoffgehalt in dem bei der Siebband-Entwässerung abgeschiedenen Belebtschlamm beträgt etwa das 10-fache desjenigen des Belebtschlammes aus dem Nachklärbecken. Dies bedeutet, daß der in die Belebungsstufe rückgeführte Belebtschlamm weniger Wasser enthält. Die hydraulische Last sinkt somit gegenüber einer herkömmlichen Nachklärung um die Differenz der entsprechenden Konzentrationen der Feststoffe im Abwasser-Belebtschlammgemisch. Hieraus folgt auch eine erhöhte Kontaktzeit des Abwassers mit der Biomasse in der Belebungsstufe. Somit ist bei gleichbleibender Dimension der Belebungsstufe eine Erhöhung der hydraulischen Last, d.h. des zugeführten Abwassers, möglich.

Bei einem Siebbandfilter handelt es sich um einen Siebtisch, über den ein Endlossiebband geführt wird. Hierzu sind zwei oder mehrere Umlenkrollen vorhanden. Das Endlosband besteht vorzugsweise aus einem Kunststoffgeflecht und weist eine Siebstruktur auf. Der Entwässerungsvorgang wird durch die Siebstruktur bewirkt. Das Abwasser-Belebtschlammgemisch wird auf den Siebtisch aufgebracht und entwässert durch das Sieb, wobei der eingedickte Schlamm in einen Trichter zur entsprechenden Weiterverarbeitung fällt. Zur Unterstützung der Abtragung des anfallenden Dickschlammes kann dieser beispielsweise von der Oberfläche des Siebbandes abgeschabt werden. Im Sieb hängengebliebene (und nicht entfernte) Masse kann entweder durch Spritzwasser, das aus dem Inneren des Siebbandtisches gespritzt wird, oder durch Druckluft aus dem Siebbandgeflecht entfernt werden. Der Einsatz von Druckluft ist insbesondere deshalb von Vorteil, da hierdurch ein Vedünnungseffekt für das Belebtschlammsystem vermieden wird, der bei Einsatz von Spritzwasser auftreten kann. Die für die Reinigung des Siebes eingesetzten Spritzdüsen sind vorzugsweise quer zum Sieb angebracht. Die Versorgung dieser Spritzdüsen kann entweder über eine externe Pumpe und/oder über einen Teilstrom des Klarfiltrates, der abgezogen und separat abgeführt wird, erfolgen. Die Weiterbeförderung des ausgefilterten Feststoffes erfolgt beispielsweise über eine Schnecke oder in freiem Gefälle, wobei das Siebreinigungswasser des Filters die notwendige Fließfähigkeit gewährleistet. Das Filtratwasser wird beispielsweise in einem geschlossenen Boden der Siebbandentwässenmg gesammelt und über Rohrleitungen abgeführt.

Vorzugsweise wird das aus der Belebungsstufe austretende Abwasser-Belebtschlammgemisch dem Entwässerungsaggregat mit konstantem Volumenstrom zugeleitet. Bei einer entsprechenden Vorrichtung zum Reinigen von Abwässern ist demzufolge eine Einrichtung zum konstanten Fördern von Abwasser-Belebtschlammgemisch aus der Belebungsstufe zum Entwässerungsaggregat vorhanden. Dies bedeutet, daß das Entwässerungsaggregat kontinuierlich mit einem gleichbleibenden Strom an Abwasser-Belebtschlammgemisch aus der Belebungsstufe versorgt wird. In das Nachklärbecken wird somit nur der verbleibende Teil des aus der Belebungsstufe austretenden Abwasser-Belebtschlammgemisches eingeleitet. Schwankungen im Abwasserbereich können somit über das Nachklärbecken ausgeglichen werden.

Wenn im Rahmen der Erfindung von einem Siebbandfilter als Entwässerungsaggregat gesprochen wird, so ist dies nicht beschränkend gemeint. So ist es möglich, den Ablauf aus der Belebungsstufe nicht in zwei, sondern in drei oder mehr Ströme aufzuteilen, wovon zwei oder mehr Ströme zwei oder mehreren Siebbandfiltern, zugeführt werden. Auf diese Weise kann eine Belebungsstufe zur Versorgung mehrerer Entwässerungsaggregate eingesetzt werden bzw. auch umgekehrt.

Zum Transport des Abwasser-Belebtschlammgemisches von der Belebungsstufe zum Entwässerungsaggregat wird vorzugsweise eine Kreiselpumpe eingesetzt. Die Kreiselpumpe hat den Vorteil einer stetigen Förderung, d.h., daß das Abwasser-Belebtschlammgemisch stetig dem Entwässerungsaggregat zugeführt wird. Ein weiterer Vorteil liegt in der kompakten Bauweise derartiger Pumpen, weswegen sie nur einen geringen Platzbedarf aufweisen.

Gemäß einer bevorzugten Ausführungsform der Erfindung umfaßt die Belebungsstufe mindestens einen, vorzugsweise etwa zwei bis fünf, Scheibentauchkörper. Das aerobe Klären erfolgt somit unter Einsatz eines oder mehrerer Scheibentauchkörper. Derartige Scheibentauchkörper, die auch als Tauchtropfkörper bezeichnet werden, sind im wesentlichen aus rotierenden Scheiben aus Kunststoff aufgebaut. Der Durchmesser derartiger Scheibentauchkörper liegt im allgemeinen zwischen 2 und 5 m, wobei beim Einsatz mehrerer Scheibentauchkörper diese zueinander vorzugsweise einen Abstand von je ca. 15 bis 20 mm aufweisen. Die Scheiben drehen sich auf einer gemeinsamen Welle, wobei sie etwa zur Hälfte in das zu reinigende Abwasser eintauchen. Der biologische Abbau der organischen Stoffe findet sowohl auf der Oberfläche der Scheibentauchkörper als auch in der Wasserphase statt, wo die Mikroorganismen wirksam werden. Gemäß einer alternativen Ausführungsform das Belebungsbecken als Scheibentauchkörper oder als belüftetes Becken ausgebildet sein.

Das gereinigte Abwasser aus dem Nachklärbecken kann, falls dies erforderlich ist, einem weiteren Filtersystem zugeführt werden. Hierzu ist bei der erfindungsgemäßen Vorrichtung dem Nachklärbecken ein Filtersystem nachgeschaltet. Das Filtersystem dient der weiteren Reinigung bzw. Filtrierung der biologisch gereinigten Abwässer. Je nach gewünschtem Reinheitsgrad können dabei verschiedene Filter zur Entfernung von Feinstschwebstoffen eingesetzt werden. Vorzugsweise werden die dabei abfiltrierten Stoffe zurück in den Zulauf zur Belebung geführt. Das durch das weitere Filtersystem gereinigte Wasser kann dann in den Vorfluter eingespeist oder in einem Klarwasserbekken zur Wiederverwendung gesammelt werden.

Das weitere Filtersystem enthält vorzugsweise einen Zweischichtfilter. Zweischichtfilter sind allgemein bekannt und enthalten zwei Schichten, jeweils eine Schicht aus einem feineren und eine Schicht aus einem gröberen Material, wobei die gröbere Schicht obenauf liegt. Der Durchlauf des zu reinigenden Wassers erfolgt, ebenso wie bei dem Siebbandfilter, von oben nach unten. In gegebenen Zeitabständen, deren Dauer von dem Verschmutzungsgrad sowie dem Durchsatz abhängt, findet eine übliche Rückspülung zur Filterreinigung statt. Danach stellt sich wieder die ursprüngliche Schichtstruktur ein. Eine derartige Filtrierung in einem Zweischichtfilter kann dann vorteilhaft oder notwendig sein, wenn die Ablaufwerte aus der Nachklärung und/oder der Siebband-Entwässerung nicht niedrig genug liegen, um den Strom unmittelbar dem Vorfluter zuführen zu können.

Gemäß einer vorteilhaften Ausführungsform der Erfindung ist das Filtersystem auch mit dem Entwässerungsaggregat über einen Ablauf desselben verbunden. Das gereinigte Abwasser aus dem Entwässerungsaggregat kann somit ganz oder teilweise dem weiteren Filtersystem zugeleitet werden. Auf diese Weise findet im Filtersystem sowohl eine Endfiltrierung des aus dem Nachklärbecken austretenden gereinigten Abwassers als auch des aus dem Entwässerungsaggregat austretenden gereinigten Abwassers statt.

Je nach Verschmutzungsgrad kann der Belebungsstufe eine mechanische Reinigungsstufe vorgeschaltet sein. Beispiele für eine solche mechanische Reinigungsstufe sind Rechen, Vorklärbecken oder Siebbandfilter. Die genannten Reinigungsmittel können entweder allein oder in Kombination eingesetzt werden. Wiederum empfiehlt sich beim Einsatz eines Siebbandfilters eine konstante Teilstrombehandlung, während im Vorklärbecken eine variable Teilstrombehandlung erfolgen kann. Zum Abfangen von stoßweise erhöhten Abwassermengen hat sich der Einsatz eines Pufferbeckens als vorteilhaft erwiesen. Bereits in der mechanischen Reinigungsstufe kann zur Verhinderung von Fäulnis z.B. ein Oxidationsmittel zugeführt werden.

Die Konsistenz des mit Hilfe des Entwässerungsaggregates bzw. Siebbandfilters eingedickten Schlammes kann durch die Zugabe von Flockungshilfsmitteln beeinflußt werden. Hierzu ist im Entwässerungsaggregat vorzugsweise eine Dosiereinrichtung zur Zugabe von Flockungshilfsmitteln zugeordnet. Diese Dosiereinrichtung kann beispielsweise in der Rohrleitung zwischen der Einrichtung zum Fördern des Belebtschlamm-Wassergemisches bzw. der Kreiselpumpe und dem Entwässerungsaggregat bzw. dem Siebfilter angeordnet sein. Die Dosiereinrichtung ist vorzugsweise so ausgebildet, daß eine Zwangsmischung der eingebrachten Flockungshilfsmittel mit dem Abwasser-Belebtschlammgemisch erfolgt. Dies kann beispielsweise durch tangentialen Ein- und Austritt des Schlamm-Wassergemisches erreicht werden. Bei der Dosiereinrichtung kann es sich beispielsweise um eine geeignete Pumpe handeln. Die Intensität der Einmischung kann des weiteren durch spezielle Einbauten beeinflußt werden, wie beispielsweise durch Wirbelstrecken, statische Mischer oder Rotor-/Statorsysteme.

Die Behandlung des Abwasser-Belebtschlammgemisches im Entwässerungsaggregat wird vorzugsweise automatisch geregelt. Hierzu ist eine geeignete Meßeinrichtung zum Messen des Feststoffgehaltes des gereinigten Abwassers dem Entwässerungsaggregat nachgeschaltet. Des weiteren ist eine Steuereinrichtung vorhanden, die die Dosiereinrichtung in Abhängigkeit des in der Meßeinrichtung gemessenen Feststoffgehaltes ansteuert. Ein Beispiel für eine Meßeinrichtung ist eine Trübungs-/Feststoffsonde. Als Alternative kann auch UV-Spektroskopie eingesetzt werden. Steigt der Feststoffgehalt im Filtratwasser an, dann wird ein Signal an die Steuereinrichtung abgegeben, wodurch die Förderleistung der Dosiereinrichtung, beispielsweise einer Flockungshilfsmittelpumpe, schrittweise erhöht wird. Die Steuerung kann beispielsweise so eingestellt werden, daß die Einstellung jeweils etwa 10 Minuten bestehen bleibt, nachdem die angestrebte Filtratqualität erreicht ist. Nach Ablauf der 10 Minuten wird die Dosiereinrichtung wieder schrittweise zurückgefahren.

Neben der Zugabe von Flockungshilfsmitteln kann die Konsistenz des eingedickten Schlammes auch durch die Siebgeschwindigkeit beeinflußt werden. Somit besteht eine weitere Möglichkeit der Regelung des erfindungsgemäßen Verfahrens. Eine weitere Option zur Sicherstellung des gewünschten Trübstoffgehaltes im Filtratwasser besteht in der Möglichkeit, die Zuführpumpe innerhalb ihrer Leistungsgrenzen in Verbindung mit der vorgenannten Dosiereinrichtung zu variieren. Wird in der Meßeinrichtung ein erhöhter Feststoffgehalt im Filtratwasser gemessen, so wird ein Signal an die Einrichtung zum Fördern bzw. die Kreiselpumpe abgegeben, welche daraufhin zurückgefahren wird. Die Zufuhrmenge an Abwasser-Belebtschlammgemisch wird auf diese Weise schrittweise reduziert. Diese Art der Regelung kann allein oder in Kombination mit dem erstgenannten Regelmechanismus eingesetzt werden.

Eine Möglichkeit der kombinierten Regelung liegt beispielsweise darin, bei zu hohem Trübstoffgehalt im gereinigten Abwasser zunächst die Förderleistung der Flockungsmittel-Dosiereinrichtung zu erhöhen. Bei Erreichen deroptimierten Förderleistung und weiterhin zu hohem Trübstoffgehalt im gereinigten Abwasser erfolgt eine Reduzierung der Flockungsmittelzufuhr zum Entwässerungsaggregat. Die Regelung kann so ausgelegt werden, daß bei Erreichen von 50% der maximalen Förderleistung der Einrichtung zum Fördern bei gleichzeitig optimiertem Flockungsmitteleinsatz der Entwässerungsvorgang nach 20 Minuten unterbrochen wird, so daß die Anlage von Hand neu eingestellt werden kann.

Der im Nachklärbecken abgeschiedene Belebtschlamm enthält eine Feststoffkonzentration von etwa 2,5 g/l bis etwa 7 g/l und insbesondere etwa 4 g/l bis etwa 5,5 g/l. Höhere Feststoffkonzentrationen im Belebtschlamm lassen sich mittels eines Nachklärbeckens nur schwer erreichen. Zudem treten bei Unter- bzw. Überschreitung dieser Werte Nachteile auf, die zur Beeinträchtigung des Systems führen.

Demgegenüber enthält der im Entwässerungsaggregat abgeschiedene Belebtschlamm Feststoffe in einer Konzentration von etwa 30 g/l bis 60 g/l, insbesondere etwa 35 g/l bis 55 g/l. Somit ist die Feststoffkonzentration im Belebtschlamm bei dem Entwässerungsaggregat, beispielsweise der Siebbandpresse, um etwa das 10-fache gegenüber derjenigen aus dem Nachklärbecken erhöht.

Die Erfindung wird nachstehend detaillierter anhand eines Beispiels und mit Bezug auf die beigefügte Zeichnung beschrieben.

In der Zeichnung zeigen:
- Fig. 1: eine Abwasser-Reinigungsanlage für die Papierindustrie nach dem Stand der Technik;
- Fig. 2: einen Erweiterungsausbau einer Anlage nach Fig. 1, welcher zur Erhöhung der Kapazität herkömmlicherweise eingesetzt wird;
- Fig. 3: eine Abwasser-Reinigungsanlage nach der vorliegenden Erfindung;
- Fig. 4: die Abwasser-Reinigungsanlage nach Fig. 1 unter Berücksichtigung der biolo- gischen Belastung;
- Fig. 5: die erfindungsgemäße Abwasser-Reinigungsanlage von Fig. 3 unter Einbezie- hung der biologischen Belastung.

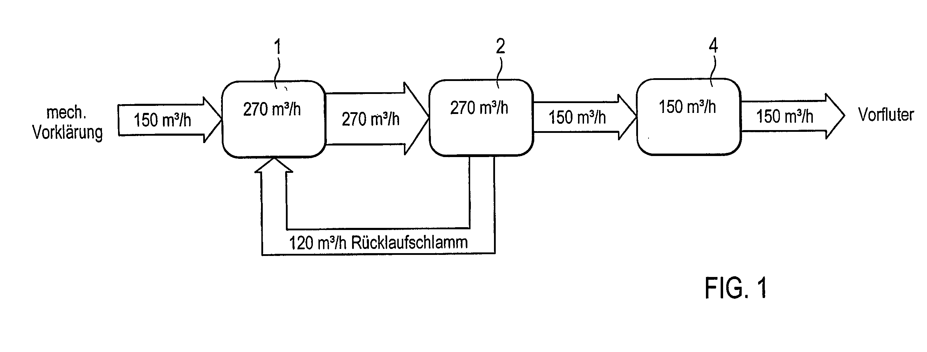

In Fig. 1 ist mit dem Bezugszeichen 1 allgemein eine Belebungsstufe gekennzeichnet. Im Falle eines vorgeschalteten Tropfkörpers erfolgt dessen Beschickung vorzugsweise mit drehzahlgeregelten Pumpen. Die Regelung der Beschickung des Tropfkörpers erfolgt, wenn dem Tropfkörper eine zweite Biostufe nachgeschaltet ist, vorzugsweise in Abhängigkeit des Sauerstoffgehaltes der zweiten Biostufe. Falls die biologische Abbaustufe Scheibentauchkörper enthält, so handelt es sich hierbei vorzugsweise um mehrere, beispielsweise vier, in Reihe geschaltete Scheibentauchkörper mit drehzahlgeregeltem Antrieb. Vorzugsweise finden jeweils nach dem zweiten und vierten Scheibentauchkörper Sauerstoffmessungen statt, die zur Regelung der Drehzahl der Scheibentauchkörper eingesetzt werden. Wie dies üblich ist, findet, vorzugsweise in dem Zulauf zur Belebungsstufe, eine Zudosierung von Nährsalzlösung statt, wenn sich dieses als notwendig erweisen sollte.

Der Überlauf aus der Belebungsstufe 1 tritt nach dem Stand der Technik vollständig in ein Nachklärbecken 2 ein. Im Nachklärbecken 2 findet die Trennung des Belebtschlamm-Abwassergemisches in klares, weitgehend feststofffreies Wasser und Belebtschlamm statt. Des weiteren erfolgt eine Rückhaltung, Eindickung und Speicherung des Belebtschlammes. Übliche Ausführungsformen eines Nachklärbeckens sind Rechteck- bzw. Rundbecken. Der abgesetzte Belebtschlamm wird über eine Rückleitung wieder der Belebungsstufe zugeführt. Hierzu können beispielsweise Schildräumer oder Saugräumer, welche letzteren nach dem Heber-Prinzip arbeiten, eingesetzt werden. Die Schlammrückführung kann kontinuierlich oder in Intervallen erfolgen.

Das aus dem Nachklärbecken austretende filtrierte Wasser wird in diesem Ausführungsbeispiel einer optionalen weiteren Filtrierungsstufe, beispielsweise einem Zweischichtfilter, zugeführt, der hier mit dem Bezugszeichen 4 gekennzeichnet ist. Hier können auch feinste Feststoffteilchen sowie Bioschlamm-Teilchenaggregate bis zu einer Größe von etwa 1 bis 5 Millimeter ausgefiltert werden. Das aus diesem Filter austretende Reinwasser kann anschließend entweder in einem Klarwasserbecken gesammelt oder direkt in den Vorfluter eingespeist werden.

Ein Beispiel für die mögliche Auslegung der in Fig. 1 gezeigten Anlage (gem. Stand der Technik) wird im folgenden gegeben:

| | | | |
|---|---|---|---|
| Belebungsstufe: | Abwasserzulauf: | 150 m³/h | |
| | Volumen: | 350 m³ | |
| | Verweilzeit: | 2,33 h | (Quot. aus Vol. 350 m³ und Abwasserzulauf 150 m³/h = 2,33 h) |
| | | | |
| Nachklärbecken: | Klärbeckenoberfläche: | 198 m² | |
| | Klärbeckenvolumen: | 653 m³ | |
| | Klärbeckenoberflächenbeschickung: | 0,76 m/h | (Quotient aus Abwasserzulauf 150 m³/h und Klärbeckenoberfläche 198 m² = 0,76 m/h) |
| | Verweilzeit: | 4,35h | (Quot. aus Klärbeckenvol. 653 m³ und Abwass.zulauf 150 m³/h) |

Die vorstehenden Angaben wurden theoretisch hergeleitet. Berücksichtigt man die tatsächlichen Betriebsverhältnisse, d.h. das Rückführen des Belebtschlammes aus dem Nachklärbecken 2 in die Belebungsstufe 1, so ergeben sich folgende Verhältnisse:

| | | |
|---|---|---|
| Belebungsstrecke: | Abwasserzulauf inkl. Rücklauf: | 270 m³/h |
| | Volumen: | 350 m³ |
| | tatsächliche Verweilzeit: | 1,30 h |
| | | |
| Nachklärbecken: | Klärbeckenoberfläche: | 198 m² |
| | Klärbeckenvolumen: | 653 m³ |
| | Rücklaufschlamm: | 120 m³/h |
| | tatsächliche Oberflächenbeschickung: | 1,36 m/h |
| | tatsächliche Verweilzeit: | 2,42 h |

In diesem Vergleich wird deutlich, daß wesentliche hydraulische Anlagenkenngrößen in der allgemein üblichen Anlagendimensionierung vernachlässigt werden, wenn der rückgeführte Belebtschlamm nicht berücksichtigt wird.

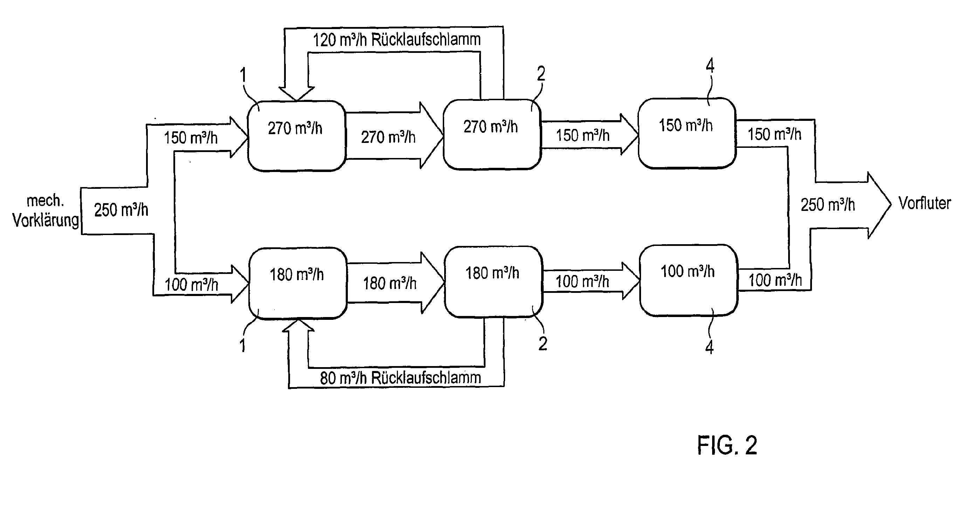

Fig. 2 zeigt den nach dem Stand der Technik üblichen Ausbau der Anlage von Fig. 1, wenn eine zusätzliche Abwassermenge zu verarbeiten ist. In Fig. 2 wurden der Ausführungsform von Fig. 1 entsprechenden Elementen die gleichen Bezugszeichen zugeordnet. Ist beispielsweise eine erhöhte Zulaufmenge von 100 m³/h zu bewältigen, müßte unter Beibehaltung der allgemein üblichen Randbedingungen und vorstehend genannten Anlagenkenngrößen ein weiteres Nachklärbecken gebaut werden. Dies hätte jedoch zur Folge, daß die effektive Verweilzeit bzw. Kontaktzeit bei gleicher Größe der Belebungsstufe um ca. 50% abnimmt. Aufgrund der dann geringeren Kontaktzeit wäre zusätzlich eine Erweiterung der Belebungsstufe zwingend erforderlich, wie dies nachfolgend näher erläutert wird. Eine Erweiterung der Belebungsstufe macht generell jedoch nur dann Sinn, wenn diese biologisch überlastet ist. Nimmt jedoch nur die Abwassermenge zu, wobei der Gehalt an Substrat im Abwasser geringer wird, sollte eher die hydraulische Last der Anlage verringert werden.

Für die in Fig. 2 gezeigte Anlage ergeben sich bei einer um 100 m³/h erhöhten Zulaufmenge folgende Daten:

| | | |
|---|---|---|
| Belebungsstrecke: | Abwasserzulauf: | 250 m³/h |
| | | (Summe aus 150 + 100 m³/h) |
| | Abwasserrücklaufschlamm: | 200 m³/h |
| | | (Summe aus 120 + 80 m³/h) |
| | Volumen Belebungsbecken: | 350 m³ |
| | tatsächliche Verweilzeit: | 0,78 h |
| | | (Quotient aus Beleb.-beckenvol. 350 m³ und Summe aus Abwasserzuläufen zum Nachklärbekken: 270 + 180 m³/h = 450 m³/h |

Um die im Zusammenhang mit Fig. 1 errechnete Verweilzeit von 1,30 h zu erreichen, muß folglich die Belebungsstufe um 67% erweitert werden (von 0,78 h auf 1,30 h).

Damit ergeben sich folgende Verhältnisse im Nachklärbecken:

| | | |
|---|---|---|
| Nachklärbecken: | Klärbeckenoberfläche: | 1 x 198 m² plus 1 x 133 m² |
| | Klärbeckenvolumen: | 1 x 653 m³ plus 1 x 436 m³ |
| | Abwassermenge: | 250 m³/h |
| | Rücklaufschlamm: | 200 m³/h |
| | tatsächliche Oberflächenbeschickung: | 1,36 m/h |
| | | (Quotient aus Summe von Abwasserzulauf 250 m³/h sowie Rücklaufschlamm 120+80 m³/h und Summe der Klärbeckenoberflächen 198 + 133 = 331m²) |
| | tatsächliche Verweilzeit: | 2,42 h |
| | | (Quot. aus Klärbeckenvol. 653 m³ und Abwasserzulauf inkl. Rücklauf 270 m³/h |

Ein derartiger Ausbau einer bestehenden Anlage ist mit großem Zeitaufwand verbunden. Zudem tritt ein großer finanzieller Investitionsbedarf auf. Durch die notwendige Erweiterung der Belebungsstufe um nahezu 70% entsteht des weiteren ein unverhältnismäßig hoher Flächenbedarf. Die Flexibilität der Anlage im Hinblick auf die Abwasserinhaltsstoffe (Konzentration der Abwasserinhaltsstoffe) ist bei einem derartigen konventionellen Ausbau eingeschränkt. Mit anderen Worten, kann sich, wenn das Abwasser "dünner" bzw. "dicker" wird, eine erhebliche Beeinträchtigung der Gesamtfunktionalität der Anlage ergeben.

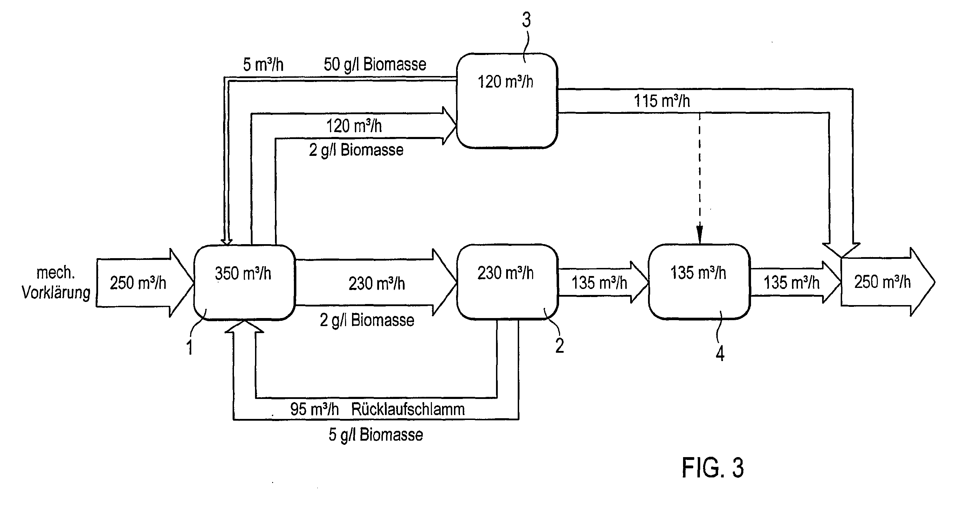

In Fig. 3 ist eine erfindungsgemäße Alternative zu dem gezeigten herkömmlichen Ausbau dargestellt. Im Anschluß an eine Belebungsstufe 1 wird der austretende Abwasserstrom hier in zwei Teilströme aufgeteilt, wobei der erste Teilstrom, wie bisher üblich, einem Nachklärbecken 2 zugeleitet wird, wohingegen der zweite Teilstrom einem Siebbandfilter 3, zugeführt wird. Sowohl aus dem Nachklärbecken 2 als auch aus dem Entwässerungsaggregat 3 wird der abgetrennte Belebtschlamm wieder in die Belebungsstufe 1 zurückgeführt. Dem Nachklärbecken ist ein zusätzliches Filtersystem 4, beispielsweise ein Zweischichtfilter, nachgeschaltet, der aus dem Ablauf des Nachklärbeckens 2 und, wahlweise, auch aus dem Ablauf des Entwässerungsaggregats 3 gespeist wird (strichlierte Linie). Das aus dem Entwässerungsaggregat 3 austretende Wasser kann jedoch bei entsprechender Sauberkeit auch die Nachfiltrierungsstufe 4 auslassen und direkt mit dem aus der Filteranlage 4 austretenden gereinigten Abwasser zusammengeführt und anschließend in den Vorfluter eingespeist werden.

Für einen entsprechenden Abwasserzulauf von 250 m³/h (dies entspricht den Verhältnissen bei der Ausführungsform nach dem Stand der Technik von Fig. 2) ergeben sich bei der erfindungsgemäßen Ausführungsform folgende Kennwerte:

| | | | |
|---|---|---|---|
| Belebungsstufe: | Abwasserzulauf: | 250 m³/h | |
| | Rücklaufschlamm: | 95 m³/h | |
| | Rücklauf aus Entwässerungsaggregat: | 5 m³/h | |
| | Volumen: | 350 m³ | |
| | tatsächliche Verweilzeit: | 1,00 h | (Quotient aus Belebungsbekkenvolumen 350 m³ und Summe aus Abwasserzulauf 250 m³ und Rücklaufschl. 95 + 5 m³/h). |

Um zu einer der ursprünglichen Ausgangslage entsprechenden tatsächlichen Verweilzeit zu gelangen, muß die Belebungsstufe hier um rund 30 % erweitert werden. Damit ergeben sich folgende Verhältnisse für das Nachklärbecken:

| | | | |
|---|---|---|---|
| Nachklärbecken: | Klärbeckenoberfläche: | 198 m² | |
| | Klärbeckenvolumen: | 653 m³ | |
| | Rücklaufschlamm inkl. Entwässerungsaggregat: | 95 m³/h | (Summe aus 90 + 5 m³/h) |
| | Abwassermenge (Einlauf in Nachklärbecken): | 230 m³/h | |
| | tatsächliche Oberflächenbeschickung: | 1,16 m/h | (Quot. aus Abwasser 230 m³ und Klärbeckenoberfläche 198 m²), |
| | tatsächliche Verweilzeit: | 2,61 h | (Quot. aus Klärbeckenvol. 653 m³ und Abwassermenge 250 m³/h). |

Es ist auf diese Weise keine Erweiterung des Nachklärungsbeckens, bezogen auf die Verweilzeit unter tatsächlichen Betriebsverhältnissen notwendig.

Aus dem gezeigten Ausführungsbeispiel zeigt sich, daß zur Bewältigung einer zusätzlichen Menge von 100 m³/h zu reinigendem Abwasser konventionell eine Erweiterung der Nachklärung um ein weiteres Nachklärbecken erforderlich ist. Die Belebung ist bei dem in Zusammenhang mit Fig. 2 gezeigten herkömmlichen Ausführungsbeispiel unter Beibehaltung der wesentlichen Anlagenkenngrößen um ca. 70% zu erweitern. Demgegenüber muß die Belebungsstufe unter Einsatz der erfindungsgemäßen Vorrichtung nur um rund 30% erweitert werden. Dies führt in der Praxis zu einer Kostenersparnis von etwa 80%. Zudem sinkt die hydraulische Last gegenüber einer herkömmlichen Nachklärung, wie sie im Zusammenhang mit Fig. 2 gezeigt ist, um über 90%. Ein zusätzlicher wirtschaftlicher Vorteil liegt darin, daß beim konventionellen Aufbau aufgrund der notwendigen starken Erweiterung der Belebungsstufe ein erhöhter Flächenbedarf auftritt. Im Gegensatz hierzu ist bei der Vorrichtung gemäß der vorliegenden Erfindung nur eine weitaus geringere zusätzliche Fläche für die Belebungsstufe notwendig. Wie dies aus den Fig. 1 und 3 zu erkennen ist, sind für die Umrüstung einer bestehenden Anlage zu einer erfindungsgemäßen Vorrichtung nur wenige zusätzliche Elemente notwendig, weswegen der Ausbau zeitnahe erfolgen kann.

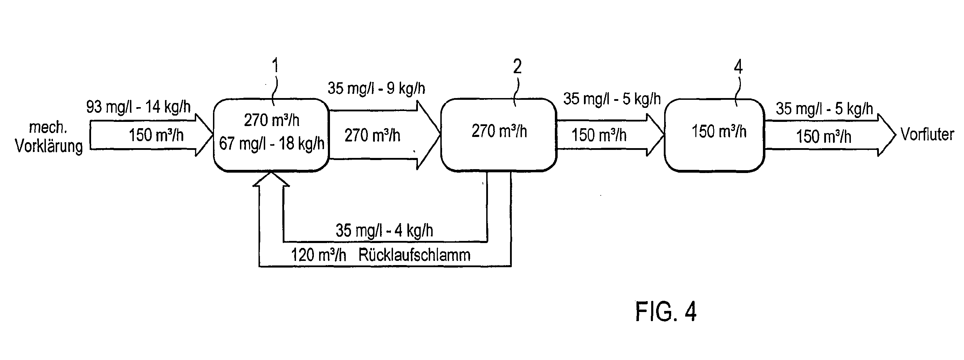

Figur 4 zeigt die Verhältnisse der bioloigschen Belastung bei der Abwasser-Reinigungsanlage nach dem Stand der Technik, wie sie in Figur 1 dargestellt ist. Die gezeigte Anlage ist für eine biologische Belastung von 560 kg CSB pro Tag, entsprechend 23 kg/h ausgelegt. Dabei ist unter der CSB-Belastung der chemische Sauerstoffbedarf zu verstehen, der eine Kenngröße zur summarischen Erfassung der oxidierbaren Inhaltsstoffe eines Abwassers darstellt. Das genormte Verfahren zur Ermittlung dieser Kenngröße ist dem Fachmann auf dem Gebiet der Abwassertechnik bekannt und soll hier deshalb nicht näher erläutert werden. Im Zulauf zur Belebung beträgt die CSB-Belastung 93 mg/l, was bei einem Zulauf von 150 m³/h einer Belastung von 14 kg/h entspricht. Der Rücklaufschlamm enthält eine Belastung von 35 mg/l, was bei der Rücklaufmenge von 120 m³/h einer Belastung von 4 kg/h entspricht. Hieraus ergibt sich für die Belebungsstufe eine biologische Belastung von 67 mg/l, was bei dem Gesamtzulauf von 270 m³/h einer Belastung von 18 kg/h entspricht, wobei das aus der Nachklärung austretende gereinigte Abwasser eine Belastung von 35 mg/l aufweist, was bei einer Wassermenge von 150 m³/h einer Belastung von 5,3 kg/h entspricht.

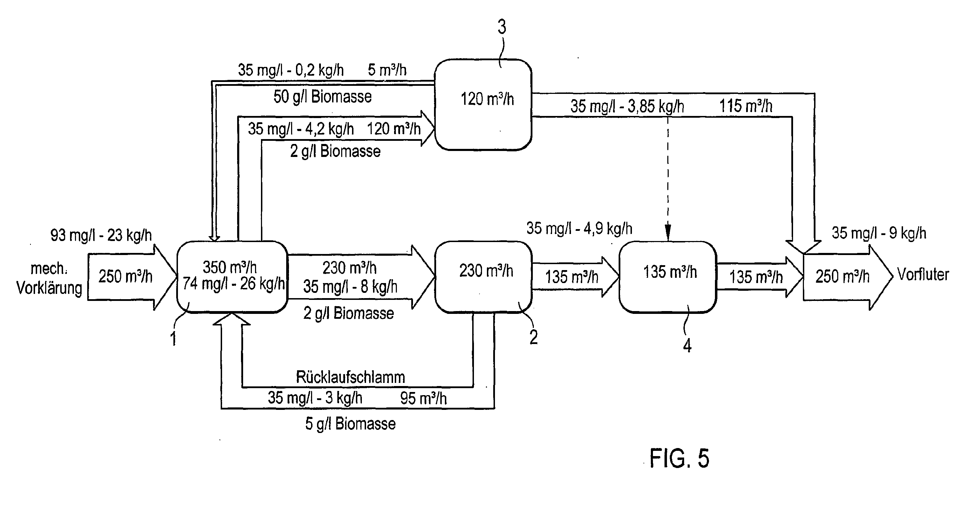

In Figur 5 sind die Verhältnisse in Bezug auf die biologische Belastung bei einer erfindungsgemäßen Anlage dargestellt, wie sie in Figur 3 gezeigt ist. Die biologische Belastung im Zulauf zur Belebungsstufe beträgt ebenfalls 93 mg/l, was aufgrund der erhöhten Zulaufmenge von insgesamt 250 m³/h hier einer biologischen Belastung von 23 kg/h entspricht. Im Rücklaufschlamm ist eine CSB-Belastung von 35 mg/l zu verzeichnen, was bei einer beförderten Rücklaufschlammmenge von 95 m³/h einer Belastung von 3 kg/h entspricht. Hinzu kommt in diesem Fall noch die biologische Belastung des Rücklaufschlammes aus der Siebbandentwässerung von 35 mg/l, was bei einer Menge von 5 m³/h einer Belastung von 0,4 kg/h entspricht.

Hieraus ergeben sich folgende Werte für die biologischen Belastungen der einzelnen Stufen:

| | |
|---|---|
| Belebungsstufe: | 74 mg/l; das entspricht bei einer gesamten Abwassermenge von 350 m³/h einem Wert von 26 kg/h; |
| Nachklärung: | 35 mg/l; dies entspricht bei einem Abwasserdurchsatz von 230 m³/h einer Belastung von 5 kg/h; |
| Siebbandentwässerung: | 35 mg/l; dies entspricht bei einem Gesamtdurchsatz von 120 m³/h einer Belastung von 4 kg/h; |
| Vorfluter: | 35 mg/l; was bei einer Wassermenge von 250 m³/h einer Belastung von 8,8 kg/h entspricht. |

Diese Beispiele zeigen, dass es möglich ist, bei gleichbleibender Zulaufkonzentration (CSB-Belastung im Abwasser) die erfindungsgemäß erweiterte Abwasserreinigungsanlage bezüglich ihrer biologischen Kapazität optimal auszunutzen. Aufgrund der erhöhten hydraulischen Leistungsfähigkeit ist eine optimale Substratbesorgung möglich, ohne dass eine gezielte Erhöhung der Zulaufkonzentration (Zugabe von z. B. Stärke) erfolgen muss.

Die erfindungsgemäße Lehre macht in ihrer allgemeinen Ausgestaltung keine quantitativen Angaben zu den "Teilen", die in den Schritten b), c) und d) erwähnt werden. Dem Fachman ist es jedoch problemlos möglich, ausgehend von dem aufzuteilenden Ausgangsstrom, die jeweiligen erforderlichen quantitativen Beziehungen zu ermitteln. Bei der Erläuterung der vorliegenden Erfindung im Zusammenhang mit den Figuren 3 und 5 wurden die besonders vorteilhaft wirksamen Teilströme bezeichnet. Sie liegen in den nachfolgend angegebenen bevorzugten Grenzen: Beim Schritt b) erfolgt vorzugsweise eine Nachklärung von mindestens etwa 5 Vol.-% des aus der Belebungsstufe austretenden Abwasser-Belebtschlammgemisches in einem Nachklärbecken (2), insbesondere von etwa 10 bis 90 Vol.-%. Entsprechendes gilt für den "anderen Teil", der im Schritt c) entwässert wird, d.h. auch hier beträgt dieser mindestens etwa 5 Vol.-% und insbesondere etwa 10 bis 90 Vol.-%. Bei dem Schritt d) erfolgt vorzugsweise ein Rückführen von mindestens etwa 5 Vol.-%, insbesondere von mindestens 10 Vol.-% und ganz besonders bevorzugt von etwa 15 bis 95 Vol.-% des im Schritt b) abgeschiedenen Belebtschlammes in das Belebtschlammbecken (1) bzw. ein Rückführen von vorzugsweise mindestens etwa 0,5 Vol.-%, insbesondere etwa 1 bis 30 Vol.-%, des im Schritt c) abgeschiedenen Belebtschlammes in das Belebtschlammbecken (1).

## Patentansprüche

1. Verfahren zum Reinigen von Abwässern, insbesondere von Abwässern der Papierindustrie, aufweisend die folgenden Verfahrensschritte:
a) aerobes Klären des Abwassers durch Belebtschlamm in einer Belebungsstufe (1);
b) Nachklären eines Teils des aus der Belebungsstufe austretenden Abwasser-Belebtschlammgemisches in einem Nachklärbecken (2);
c) Entwässern eines anderen Teils des aus der Belebungsstufe austretenden Abwasser-Belebtschlammgemisches in einem Siebbandfilter als Entwässerungsaggregat (3);
d) Rückführen zumindest eines Teils des in den Schritten b) und c) abgeschiedenen Belebtschlammes in das Belebtschlammbecken (1), wobei der in Schritt b) abgeschiedene Belebungsschlamm in einer Konzentration von 2,5 g/l bis 7 g/l in die Belebungsstufe (1), und der in Schritt c) abgeschiedene Belebtschlamm in einer Konzentration von 30 g/l bis 60 g/l in die Belebungsstufe (1) rückgeführt werden; und
e) Entlangleiten des gereinigten Abwassers aus dem Entwässerungsaggregat (3) nach dem Rückführen des Belebtschlammes am Nachklärbecken (2) vorbei.

2. Verfahren nach Anspruch 1, **dadurch gekennzeichnet, dass** das aus der Belebungsstufe (1) austretende Abwasser-Belebtschlammgemisch dem Entwässerungsaggregat (3) mit konstantem Volumenstrom zugeleitet wird.

3. Verfahren nach Anspruch 1 oder 2, **dadurch gekennzeichnet, dass** das aerobe Klären in Stufe a) unter Einsatz eines Scheibentauchkörpers erfolgt.

4. Verfahren nach zumindest einem der Ansprüche 1 bis 3, **dadurch gekennzeichnet, dass** das gereinigte Abwasser aus dem Nachklärbecken (2) einem Filtersystem (4) zugeführt wird.

5. Verfahren nach Anspruch 4, **dadurch gekennzeichnet, dass** das gereinigte Abwasser aus dem Nachklärbecken (2) einem Zweischichtfilter als Filtersystem zugeleitet wird.

6. Verfahren nach Anspruch 4 oder 5, **dadurch gekennzeichnet, dass** das gereinigte Abwasser aus dem Entwässerungsaggregat (3) zumindest teilweise dem Filtersystem (4) zugeleitet wird.

7. Verfahren nach zumindest einem der vorstehenden Ansprüche, **dadurch gekennzeichnet, dass** der in Schritt b) abgeschiedene Belebtschlamm in einer Konzentration von etwa 4 g/l bis etwa 5,5 g/l in die Belebungsstufe rückgeführt wird.

8. Verfahren nach zumindest einem der vorstehenden Ansprüche, **dadurch gekennzeichnet, dass** der in Schritt c) abgeschiedene Belebtschlamm in einer Konzentration von 35 g/l bis 55 g/l in die Belebungsstufe (1) rückgeführt wird.

9. Vorrichtung zum Reinigen von Abwässern, insbesondere von Abwässern der Papierindustrie, aufweisend eine Belebungsstufe (1) zur aeroben Klärung des Abwassers, ein Nachklärbecken (2) zur Fest-/Flüssigtrennung sowie ein Entwässerungsaggregat (3) zur Schlammentwässerung, **dadurch gekennzeichnet, dass** sowohl das Nachklärbecken (2) als auch das Entwässerungsaggregat (3) über je mindestens zwei Rohrleitungssysteme mit der Belebungsstufe (1) in Verbindung stehen, wobei eine Rohrleitung vom Ablauf der Belebungsstufe (1) zum Nachklärbecken (2) bzw. dem Entwässerungsaggregat (3) führt, und der Zuleitung des Abwasser-Belebschlammgemisches und eine weitere Rohrleitung der Rückführung des im Nachklärbecken (2) bzw. dem Entwässerungsaggregat (3) eingedickten Belebtschlamms in die Belebungsstufe (1) dient, und dass der Ablauf des Entwässerungsaggregates (3) am Nachklärbecken (2) vorbeiführt, wobei das Entwässerungsaggregat (3) einen Siebbandfilter aufweist.

10. Vorrichtung nach Anspruch 11, **dadurch gekennzeichnet, dass** sie eine Einrichtung zum konstanten Fördern von Abwasser-Belebtschlammgemisch aus der Belebungsstufe (1) zum Entwässerungsaggregat (3) aufweist.

11. Vorrichtung nach Anspruch 12, **dadurch gekennzeichnet, dass** die Einrichtung zum konstanten Fördern als Kreiselpumpe ausgebildet ist.

12. Vorrichtung nach einem der Ansprüche 11 oder 12, **dadurch gekennzeichnet, dass** die Belebungsstufe (1) mindestens einen Scheibentauchkörper umfasst.

13. Vorrichtung nach mindestens einem der Ansprüche 11 bis 14, **dadurch gekennzeichnet, dass** dem Nachklärbecken (2) ein Filtersystem (4) nachgeschaltet ist.

14. Vorrichtung nach Anspruch 15, **dadurch gekennzeichnet, dass** das Filtersystem einen Zweischichtfilter enthält.

15. Vorrichtung nach einem der Ansprüche 14 oder 15, **dadurch gekennzeichnet, dass** der Ablauf des Entwässerungsaggregates (3) mit dem Filtersystem verbunden ist.

16. Vorrichtung nach einem der Ansprüche 11 bis 16, **dadurch gekennzeichnet, dass** der Belebungsstufe (1) eine mechanische Reinigungsstufe vorgeschaltet ist.

17. Vorrichtung nach einem der Ansprüche 11 bis 17, **dadurch gekennzeichnet, dass** dem Entwässerungsaggregat (3) eine Dosier- und Zugabeeinrichtung zur Zugabe von Flockungshilfsmitteln vorgeschaltet ist.

18. Vorrichtung nach Anspruch 19, **dadurch gekennzeichnet, dass** eine Messeinrichtung zum Messen des Trübstoffgehaltes des gereinigten Abwassers dem Entwässerungsaggregat nachgeschaltet ist und dass eine Steuereinrichtung zur Steuerung der Dosiereinrichtung in Abhängigkeit des in der Messeinrichtung gemessenen Trübstoffgehalts vorhanden ist.

## Claims

1. A method for purifying waste water, in particular waste water from the paper industry, comprising the following method steps:
a) aerobic clarification of the waste water by activated sludge in an activation stage (1);
b) subsequent clarification of a portion of the waste water/activated sludge mixture leaving the activation stage in a secondary settling tank;
c) dehydration of another portion of the waste water/activated sludge mixture leaving the activation stage in a sieve belt filter as a dehydrating unit (3);
d) returning at least a portion of the activated sludge separated in steps b) and c) into the activated sludge tank (1), the activated sludge separated in step b) being returned in a concentration of 2.5 g/l to 7 g/l to the activation stage (1), and the activated sludge separated in step c) being returned in a concentration of 30 g/l to 60 g/l to the activation stage (1); and
e) guiding the purified waste water from the dehydrating unit (3) after the return of the activated sludge past the secondary settling tank (2).

2. A method according to claim 1, **characterised in that** the waste water/activated sludge mixture leaving the activation stage (1) is guided to the dehydrating unit (3) at a constant volume flow.

3. A method according to claim 1 or 2, **characterised in that** the aerobic clarification in stage a) takes place using a biodisk.

4. A method according to at least any one of claims 1 to 3, **characterised in that** the purified waste water from the secondary settling tank (2) is fed to a filter system (4).

5. A method according to claim 4, **characterised in that** the purified waste water from the secondary settling tank (2) is fed to a twin-layer filter as the filter system.

6. A method according to claim 4 or 5, **characterised in that** the purified waste water from the dehydrating unit (3) is at least partially fed to the filter system (4).

7. A method according to at least any one of the preceding claims, **characterised in that** the activated sludge separated in step b) is returned in a concentration of about 4 g/l to about 5.5 g/l to the activation stage.

8. A method according to at least any one of the preceding claims, **characterised in that** the activated sludge separated in step c) is returned in a concentration of 35 g/l to 55 g/l to the activation stage (1).

9. A device for purifying waste water, in particular waste water from the paper industry, having an activation stage (1) for the aerobic clarification of the waste water, a secondary settling tank (2) for the solid/fluid material separation and a dehydrating unit (3) for sludge dehydration, **characterised in that** both the secondary settling tank (2) and the dehydrating unit (3) are connected by at least two pipeline systems in each case to the activation stage (1), a pipeline leading from the discharge of the activation stage (1) to the secondary settling tank (2) or the dehydrating unit (3), and the supply line of the waste water/activated sludge mixture and a further pipeline being used to return the activated sludge concentrated in the secondary settling tank (2) or the dehydrating unit (3), and **in that** the discharge of the dehydrating unit (3) is guided past the secondary settling tank (2), the dehydrating unit (3) having a sieve belt filter.

10. A device according to claim 9, **characterised in that** it has a mechanism for the constant conveying of waste water/activated sludge mixture from the activation stage (1) to the dehydrating unit (3).

11. A device according to claim 10, **characterised in that** the mechanism for constant conveying is configured as a centrifugal pump.

12. A device according to either of claims 9 or 10, **characterised in that** the activation stage (1) comprises at least one biodisk.

13. A device according to at least any one of claims 9 to 12, **characterised in that** a filter system (4) is connected downstream of the secondary settling tank (2).

14. A device according to claim 13, **characterised in that** the filter system contains a twin-layer filter.

15. A device according to either of claims 12 or 13, **characterised in that** the discharge of the dehydrating unit (3) is connected to the filter system.

16. A device according to any one of claims 9 to 14, **characterised in that** a mechanical purification stage is connected upstream of the activation stage (1).

17. A device according to any one of claims 9 to 15, **characterised in that** a metering and feeding mechanism for feeding auxiliary flocculants is connected upstream of the dehydrating unit (3).

18. A device according to claim 17, **characterised in that** a measuring mechanism for measuring the turbidity content of the purified waste water is connected downstream of the dehydrating unit and **in that** a control mechanism for controlling the metering mechanism as a function of the turbidity content measured in the measuring mechanism is present.

## Revendications

1. Procédé pour l'épuration d'eaux usées, en particulier d'eaux usées de l'industrie du papier, présentant les étapes de procédé suivantes :
a) décantation aérobie des eaux usées par de la boue activée dans un niveau d'activation (1) ;
b) décantation secondaire d'une partie de mélange eaux usées-boue activée sortant du niveau d'activation dans un bassin de décantation secondaire (2) ;
c) déshydratation d'une autre partie du mélange eaux usées-boue activée sortant du niveau d'activation dans un filtre à bande de filtration comme ensemble de déshydratation (3) ;
d) recyclage d'au moins une partie de la boue activée précipitée aux étapes b) et c) dans le bassin de boue activée (1), la boue d'activation précipitée à l'étape b) étant recyclée dans une concentration de 2,5g/l jusqu'à 7 g/l dans le niveau d'activation (1), et la boue activée précipitée à l'étape c) dans une concentration de 30 g/l à 60 g/l dans le niveau d'activation (1) ; et
e) glissement des eaux usées épurées provenant de l'ensemble de déshydratation (3) après le recyclage de la boue activée en passant le long du bassin de décantation secondaire (2).

2. Procédé selon la revendication 1, **caractérisé en ce que** le mélange eaux usées-boue activée sortant du niveau d'activation (1) est amené à l'ensemble de déshydratation (3) avec un flux volumique constant.

3. Procédé selon la revendication 1 ou 2, **caractérisé en ce que** la décantation aérobie s'effectue au niveau a) en utilisant un disque biologique.

4. Procédé selon au moins l'une quelconque des revendications 1 à 3, **caractérisé en ce que** les eaux usées épurées provenant d'un bassin de décantation secondaire (2) sont amenées à un système de filtre (4).

5. Procédé selon la revendication 4, **caractérisé en ce que** les eaux usées épurées provenant du bassin de décantation secondaire (2) sont amenées à un filtre à deux couches comme système de filtre.

6. Procédé selon la revendication 4 ou 5, **caractérisé en ce que** les eaux usées épurées provenant de l'ensemble de déshydratation (3) sont amenées au moins partiellement (4) au système de filtre (4).

7. Procédé selon au moins l'une quelconque des revendications précédentes, **caractérisé en ce que** la boue activée précipitée à l'étape b) est recyclée dans une concentration d'environ 4 g/l jusqu'à environ 5,5 g/l dans le niveau d'activation.

8. Procédé selon au moins l'une quelconque des revendications précédentes, **caractérisé en ce que** la boue activité précipitée à l'étape c) est recyclée dans une concentration de 35 g/l jusqu'à 55 g/l dans le niveau d'activation (1).

9. Dispositif pour le nettoyage d'eaux usées, en particulier provenant d'eaux usées de l'industrie du papier, présentant un niveau d'activation (1) pour la décantation aérobie des eaux usées, un bassin de décantation secondaire (2) pour la séparation solide/liquide et un ensemble de déshydratation (3) pour la déshydratation de la boue, **caractérisé en ce que** aussi bien le bassin de décantation secondaire (2) que l'ensemble de déshydratation (3) sont en liaison au moyen de respectivement au moins deux systèmes de conduite avec le niveau d'activation (1), une conduite allant de l'écoulement du niveau d'activation (1) au bassin de décantation secondaire (2) ou à l'ensemble de déshydratation (3), et servant à l'arrivée du mélange eaux usées-boue activée et une autre conduite servant au recyclage de la boue activée épaissie dans le bassin de décantation secondaire (2) ou l'ensemble de déshydratation (3) dans le niveau d'activation (1), et **en ce que** l'écoulement de l'ensemble de déshydratation (3) passe devant le bassin de décantation secondaire (2), l'ensemble de déshydratation (3) présentant un filtre à bande de filtration.

10. Dispositif selon la revendication 11, **caractérisé en ce qu'**il présente un système pour le transport constant de mélange eaux usées-boue activée du niveau d'activation (1) à l'ensemble de déshydratation (3).

11. Dispositif selon la revendication 12, **caractérisé en ce que** le système est conçu pour le transport constant sous forme de pompe centrifuge.

12. Dispositif selon l'une quelconque des revendications 11 ou 12, **caractérisé en ce que** le niveau d'activation (1) comporte au moins un disque biologique.

13. Dispositif selon au moins l'une quelconque des revendications 11 à 14, **caractérisé en ce qu'**un système de filtre (4) est placé en aval du bassin de décantation secondaire (2).

14. Dispositif selon la revendication 15, **caractérisé en ce que** le système de filtre contient un filtre à deux couches.

15. Dispositif selon l'une quelconque des revendications 14 ou 15, **caractérisé en ce que** l'écoulement de l'ensemble de déshydratation (3) est relié au système de filtre.

16. Dispositif selon l'une quelconque des revendications 11 à 16, **caractérisé en ce qu'**un niveau de nettoyage mécanique est placé en amont du niveau d'activation (1).

17. Dispositif selon l'une quelconque des revendications 11 à 17, **caractérisé en ce qu'**un système de dosage et d'addition est placé en amont de l'ensemble de déshydratation (3) pour l'addition d'agents auxiliaires de floculation.

18. Dispositif selon la revendication 19, **caractérisé en ce qu'**un système de mesure destiné à la mesure de la teneur en matière opaque des eaux usées épurées est placé en aval de l'ensemble de déshydratation et **en ce qu'**un système de commande pour la commande du système de dosage en fonction de la teneur en matière opaque mesurée dans le système de mesure est présent.
